# FASCICULE DE BREVET EUROPEEN

(11) **EP 4 431 361 B1**
(45) Date de publication et mention de la délivrance du brevet: **27.05.2026**
(21) Numéro de dépôt: 23305346.1
(22) Date de dépôt: 14.03.2023
(51) Int. Cl.: B61D 35/00, B61D 1/06, B60R 15/04, B64D 11/02, E03F 1/00

(54) **SYSTÈME DE TOILETTES SOUS VIDE ET VOITURE D'UN VÉHICULE DESTINÉ AU TRANSPORT DE PASSAGERS**
VAKUUMTOILETTENSYSTEM UND FAHRZEUG FÜR DEN PERSONENTRANSPORT
VACUUM TOILET SYSTEM AND PASSENGER CAR

(43) Date de publication de la demande: 18.09.2024
(73) Titulaire: SpeedInnov, 75008 Paris (FR)
(72) Inventeur: LENEUTRE, Valentin, 17290 Le Thou (FR)
(74) Mandataire: Plasseraud IP

(56) Documents cités:
- EP-A2- 1 067 247
- WO-A1-2017/129862

## Description

La présente invention concerne un système de toilettes sous vide, installé dans un véhicule destiné au transport de passagers.

Dans les véhicules destinés au transport de passagers, comme les véhicules ferroviaires, et en particulier les trains, il est connu d'installer des systèmes de toilettes sous vide.

Un système de toilettes sous vide comprend généralement une cuvette reliée par une conduite à système d'évacuation composé d'un réservoir d'eaux usées et d'une pompe de mise à vide apte à générer une dépression dans le réservoir d'eaux usées pour aspirer des eaux usées de la cuvette vers le réservoir d'eaux usées.

Dans les véhicules à deux étages comprenant un étage supérieur et un étage inférieur superposés, il est avantageux d'installer un seul système d'évacuation relié à une cuvette installée à l'étage inférieur et une cuvette installée à l'étage supérieur afin d'économiser de la place.

Cependant, cet agencement n'est pas entièrement satisfaisant en ce qui concerne la fiabilité du système. En effet, en cas de disfonctionnement de l'un des composants, le système d'évacuation est mis hors service, et donc les toilettes de l'étage inférieur et de l'étage supérieur sont mises hors service, même si le disfonctionnement provient d'une fuite au niveau de la conduite d'une seule des deux cuvettes.

Le document EP 1 067 247 A2 décrit un exemple un système de toilettes sous vide.

Un but de l'invention est de proposer un système de toilettes sous vide fiable, économe en place et adapté à un véhicule à deux étages.

A cet effet, l'invention a pour objet un système de toilettes sous vide selon la revendication 1..

Grâce au dispositif de commande, il est possible d'identifier l'origine de la fuite d'air et d'isoler la ligne défectueuse du reste du système de toilettes sous vide, de sorte que la ligne fonctionnant correctement puisse rester en service.

Dans des modes de réalisation particuliers, le système de toilettes sous vide comprend une ou plusieurs des caractéristiques optionnelles des revendications 2 à 7, prise(s) individuellement ou suivant toute combinaison techniquement possible.

L'invention a également pour objet une voiture d'un véhicule selon la revendication 8.

L'invention a également pour objet un procédé d'identification de la source d'une fuite d'air selon la revendication 9.

L'invention et ses avantages seront mieux compris à la lecture de la description qui va suivre, donnée uniquement à titre d'exemple non limitatif, et faite en se référant aux dessins annexés, sur lesquels :
- la figure 1 est une représentation schématique de côté de l'intérieur d'une voiture d'un véhicule comprenant un système de toilettes sous vide, et
- la figure 2 est une représentation schématique d'un procédé d'identification de la source de la fuite d'air.

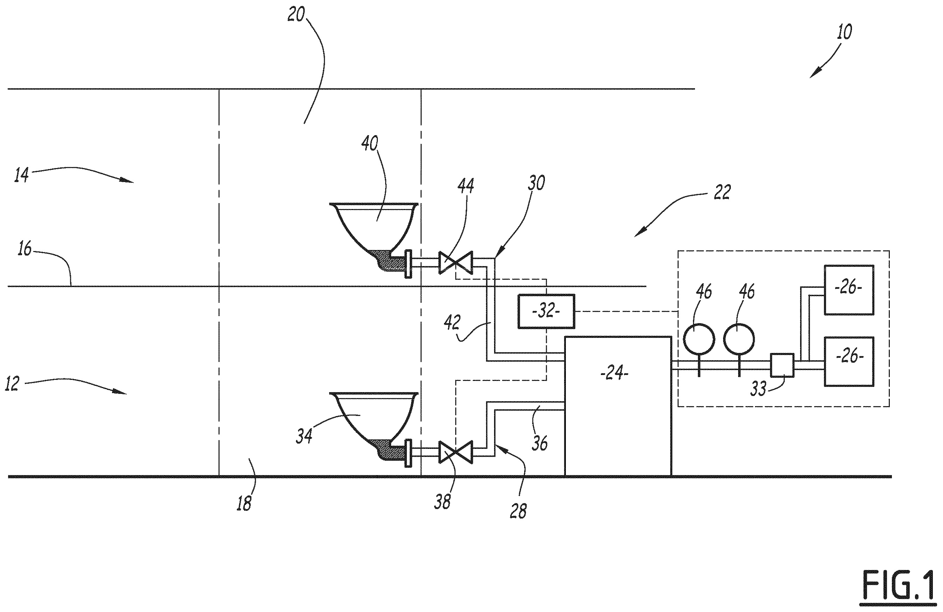

La figure 1 illustre l'intérieur d'une voiture 10 d'un véhicule de transport de passagers.

Le véhicule est par exemple un véhicule ferroviaire tel qu'un train, en particulier un train longue distance. En variante, le véhicule est un véhicule routier, en particulier un car ou un bus.

La voiture 10 comprend un premier étage 12 et un deuxième étage 14, de préférence superposés. Le premier étage 12 et le deuxième étage 14 sont en particulier séparés l'un de l'autre par une paroi intérieure 16.

Le premier étage 12 est par exemple situé au-dessus du deuxième étage 14. La paroi intérieure 16 définit alors un plafond du premier étage 12 et un plancher du deuxième étage 14. En variante, la configuration est inversée, le premier étage 12 étant situé au-dessous du deuxième étage 14.

Par exemple, le premier étage 12 et/ou le deuxième étage 14 définissent chacun une salle de passagers destinée à accueillir des passagers.

Avantageusement, la voiture 10 comprend une première cabine de toilettes 18 et une deuxième cabine de toilettes 20.

En particulier, la première cabine de toilettes 18 est agencée au premier étage 12 et la deuxième cabine de toilettes 20 est agencée au deuxième étage 14. La première cabine de toilettes 18 et la deuxième cabine de toilettes 20 sont par exemple agencées l'une au-dessus de l'autre et sont séparées par la paroi intérieure 16.

La voiture 10 comprend un système de toilettes sous vide 22 comprenant un réservoir d'eaux usées 24, au moins une pompe de mise à vide 26, une première ligne 28, une deuxième ligne 30 et un dispositif de commande 32.

Avantageusement, le système de toilettes sous vide 22 comprend deux pompes de mise à vide 26, de préférence identiques, afin d'assurer une redondance en cas de défaillance de l'une des deux pompes à vide 26.

Avantageusement, le système de toilettes sous vide 22 comprend, en outre, un filtre à odeur 33 disposé entre le réservoir d'eaux usées 24 et la ou les pompes de mise à vide 26.

Le réservoir d'eaux usées 24 est disposé de préférence à celui du premier étage 12 et du deuxième étage 14 qui est le niveau inférieur, de sorte à faciliter sa vidange lors d'opérations de manutention.

Le réservoir d'eaux usées 24 est par exemple une cuve en acier inoxydable de contenance comprise entre 150 L et 700 L.

Comme illustré sur la figure 1, la première ligne 28 comprend une première cuvette de toilettes 34 connectée au réservoir d'eaux usées 24 par une première conduite 36 munie d'une première vanne d'isolation 38.

La première cuvette de toilettes 34 est de préférence agencée au premier étage 12, et en particulier dans la première cabine de toilettes 18.

La première conduite 36 relie fluidiquement la première cuvette de toilettes 34 au réservoir d'eaux usées 24, et en particulier permet l'écoulement des eaux usées de la première cuvette de toilettes 34 au réservoir d'eaux usées 24, notamment lorsqu'une commande d'évacuation (ou « chasse d'eau ») associée à la première cuvette de toilettes 34 est déclenchée.

La première vanne d'isolation 38 est de préférence mobile entre une position d'ouverture, dans laquelle l'écoulement des eaux usées de la première cuvette de toilettes 34 au réservoir d'eaux usées 24 est autorisé, et une position de fermeture, dans laquelle l'écoulement des eaux usées de la première cuvette de toilettes 34 au réservoir d'eaux usées 24 est bloqué.

La première vanne d'isolation 38 est par exemple une électrovanne monostable ou bistable.

La deuxième ligne 30 comprend une deuxième cuvette de toilettes 40 connectée au réservoir d'eaux usées 24 par une deuxième conduite 42 munie d'une deuxième vanne d'isolation 44.

La deuxième cuvette de toilettes 40 est de préférence agencée au deuxième étage 14, et en particulier dans la deuxième cabine de toilettes 20.

La deuxième conduite 42 relie fluidiquement la deuxième cuvette de toilettes 40 au réservoir d'eaux usées 24, et en particulier permet l'écoulement des eaux usées de la deuxième cuvette de toilettes 40 au réservoir d'eaux usées 24, notamment lorsqu'une commande d'évacuation (ou « chasse d'eau ») associée à la deuxième cuvette de toilettes 40 est déclenchée.

La deuxième vanne d'isolation 44 est de préférence mobile entre une position d'ouverture, dans laquelle l'écoulement des eaux usées de la deuxième cuvette de toilettes 40 au réservoir d'eaux usées 24 est autorisé, et une position de fermeture, dans laquelle l'écoulement des eaux usées de la deuxième cuvette de toilettes 40 au réservoir d'eaux usées 24 est bloqué.

La deuxième vanne d'isolation 44 est par exemple une électrovanne monostable ou bistable.

Chaque pompe de mise à vide 26 est raccordée au réservoir d'eaux usées 24 pour générer une dépression dans le réservoir d'eaux usées 24 pour l'aspiration des eaux usées de la première cuvette de toilettes 34 et de la deuxième cuvette de toilettes 40 vers le réservoir d'eaux usées 24, via la première conduite 36 et la deuxième conduite 42 respectivement.

Chaque pompe de mise à vide 26 est de préférence une pompe pneumatique.

En particulier, chaque pompe de mise à vide 26 est une trompe à eau configurée pour créer une dépression par effet Venturi.

Le dispositif de commande 32 est configuré pour détecter une fuite d'air affectant la première ligne 28 et commander la fermeture de la première vanne d'isolation 38 en cas de détection d'une fuite d'air affectant la première ligne 28.

En outre, le dispositif de commande 32 est configuré pour détecter une fuite d'air affectant la deuxième ligne 30 et commander la fermeture de la deuxième vanne d'isolation 44 en cas de détection d'une fuite d'air affectant de la deuxième ligne 30.

Le dispositif de commande 32 est de préférence un dispositif électronique relié électriquement aux autres composants du système de toilettes sous vide 22, comme schématisé en pointillé sur la Figure 1.

Le dispositif de commande 32 est connecté à au moins un capteur de pression 46 configuré pour mesurer le niveau de dépression P dans le réservoir d'eaux usées 24.

En particulier, le dispositif de commande 32 est connecté à de préférence à deux capteurs de pression 46, chacun configuré pour mesurer le niveau de dépression P dans le réservoir d'eaux usées 24, afin d'assurer une redondance en cas de défaillance de l'un des deux capteurs de pression 46.

En particulier, chaque capteur de pression 46 est configuré pour communiquer le niveau de dépression P mesuré au dispositif de commande 32.

Le niveau de dépression P est par exemple égal à la valeur absolue de la pression relative correspondante. Par exemple, un niveau de dépression P égal à 0,8 correspond à une pression relative de - 0,8 bar.

Le dispositif de commande 32 est, de préférence, configuré pour, en cas de niveau de dépression P dans le réservoir d'eaux usées 24 inférieur à un seuil prédéterminé P1 indicatif d'une fuite d'air, commander différentes configurations d'ouverture / fermeture de la première vanne d'isolation 38 et de la deuxième vanne d'isolation 44 en mesurant la dépression dans le réservoir d'eaux usées 24 pour chacune des configurations, pour déterminer si la fuite d'air affecte la première ligne 28, la deuxième ligne 30 et/ou le réservoir d'eaux usées 24.

Le seuil prédéterminé P1 indicatif d'une fuite d'air est par exemple compris entre 0,1 et 2.

En particulier, le dispositif de commande 32 est configuré pour, en cas de niveau de dépression P dans le réservoir d'eaux usées 24 inférieur au seuil prédéterminé P1 indicatif d'une fuite d'air, commander la fermeture de la première vanne d'isolation 38 et l'ouverture la deuxième vanne d'isolation 44 en mesurant la dépression dans le réservoir d'eaux usées 24, et/ou pour commander l'ouverture de la première vanne d'isolation 38 et la fermeture de la deuxième vanne d'isolation 44 en mesurant la dépression dans le réservoir d'eaux usées 24 et/ou pour commander la fermeture de la première vanne d'isolation 38 et la fermeture de la deuxième vanne d'isolation 44, de manière à déterminer si la fuite affecte la première ligne 28, la deuxième ligne 30 et/ou le réservoir d'eaux usées 24.

Avantageusement, le dispositif de commande 32 est configuré pour commander la fermeture de la première vanne d'isolation 38 et l'ouverture de la deuxième vanne d'isolation 44 si la fuite d'air affecte seulement la première ligne 28, pour commander l'ouverture de la première vanne d'isolation 38 et la fermeture de la deuxième vanne d'isolation 44 si la fuite d'air affecte seulement la deuxième ligne 30, et/ou pour commander la fermeture de la première vanne d'isolation 38 et la fermeture de la deuxième vanne d'isolation 44 si la fuite d'air affecte simultanément la première ligne 28 et la deuxième ligne 30 ou si la fuite d'air affecte le réservoir d'eaux usées 24.

Optionnellement, si le dispositif de commande 32 est connecté à deux capteurs de pression 46 comme illustré sur la figure 1, le dispositif de commande 32 est de préférence configuré pour comparer le niveau de dépression P mesuré par chacun des deux capteurs de pression 46 pour identifier une défaillance éventuelle de l'un des deux capteurs de pression 46.

A cet effet, le dispositif de commande 32 compare, par exemple, les valeurs mesurées par les deux capteurs de pression 46.

Dans le cas où la différence absolue entre les valeurs mesurées par les deux capteurs de pression 46 est inférieure à un seuil prédéterminé, le dispositif de commande 32 est par exemple configuré pour identifier que les deux capteurs de pression 46 fonctionnent correctement et pour utiliser la valeur mesurée par l'un des deux capteurs 46 ou la moyenne des valeurs mesurées par les deux capteurs de pression 46 pour identifier s'il y a une fuite d'air comme décrit précédemment.

Dans le cas où la différence absolue entre les valeurs mesurées par les deux capteurs de pression 46 est supérieure au seuil prédéterminé, le dispositif de commande 32 est par exemple configuré pour identifier que l'un des deux capteurs de pression 46 est défectueux. Dans ce cas-là, le dispositif de commande 32 utilise par exemple la valeur mesurée par le capteur de pression 46 non-défectueux pour identifier s'il y a une fuite d'air tel que décrit précédemment.

Optionnellement, si deux pompes de mise à vide 26 sont prévues comme illustré sur la figure 1, le dispositif de commande 32 est par exemple configuré pour identifier une défaillance de l'une des deux pompes de mise à vide 26.

A cet effet, pour tester une des deux pompes de mise à vide 26, le dispositif de commande 32 est par exemple configuré pour comparer le niveau de dépression P mesuré par au moins l'un des deux capteurs de pression 46 avant et après la génération d'une dépression dans le réservoir d'eaux usées 24 à l'aide de la pompe de mise à vide 26 testée.

Si le niveau de dépression P reste sensiblement le même avant et après la génération d'une dépression dans le réservoir d'eaux usées 24, le dispositif de commande 32 identifie que la pompe de mise à vide 26 testée est défectueuse.

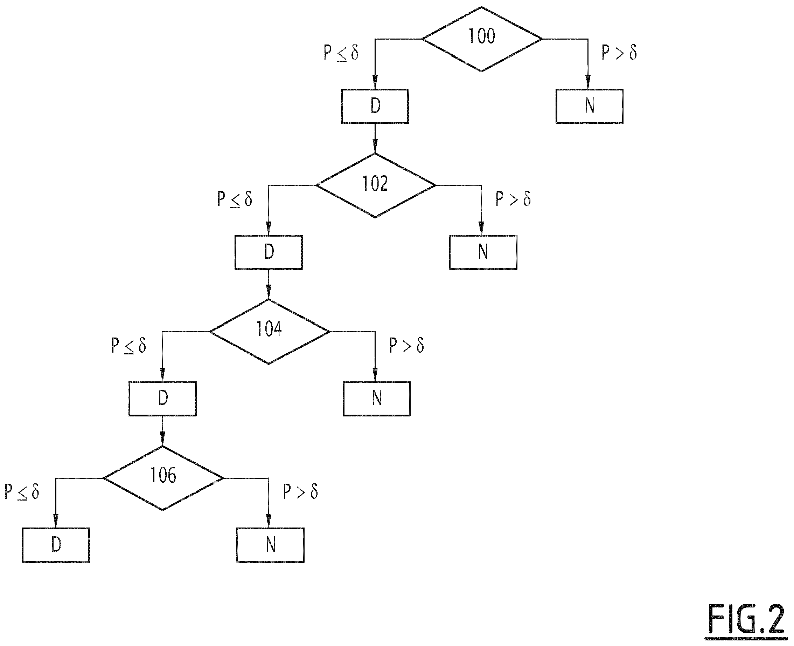

Un exemple de procédé d'identification de la source de la fuite d'air mise en œuvre par le dispositif de commande 32 va maintenant être décrit en référence à la figure 2.

Dans une étape de détection 100, le dispositif de commande 32 compare le niveau de dépression P mesuré par au moins un des capteurs de pression 46 à un seuil prédéterminé δ.

Si le niveau de dépression P est supérieur au seuil prédéterminé δ, le dispositif de commande 32 identifie que le système de toilettes sous vide 22 est dans un état de fonctionnement N normal sans fuite d'air. Le procédé d'identification s'arrête ici.

Si le niveau de dépression P est inférieur au seuil prédéterminé δ, le dispositif de commande 32 identifie que le système de toilettes sous vide 22 est dans un état de fonctionnement D défectueux avec une fuite d'air.

Ensuite dans une première étape de discrimination 102, le dispositif de commande 32 teste si la fuite d'air affecte la première ligne 28. A cet effet, le dispositif de commande 32 isole la première ligne 28 en fermant la première vanne d'isolation 38 pour bloquer la première conduite 36, la deuxième vanne d'isolation 44 restant ouverte, puis active l'une des pompes de mise à vide 26 de sorte à générer une dépression dans le réservoir d'eaux usées 24 et le dispositif de commande 32 mesure le niveau de dépression P dans le réservoir d'eaux usées 24.

Si le niveau de dépression P est supérieur au seuil prédéterminé δ, le dispositif de commande 32 identifie que le système de toilettes sous vide 22 avec la première ligne 28 isolée est dans un état de fonctionnement N normal sans fuite d'air. Le dispositif de commande 32 identifie ainsi que la fuite d'air affecte seulement la première ligne 28. Le procédé d'identification s'arrête ici. Le système de toilette sous vide 22 est par exemple maintenu en état de fonctionnement avec la première ligne 28 mise hors service.

Si le niveau de dépression P est inférieur ou égal au seuil prédéterminé δ, le dispositif de commande 32 identifie que le système de toilettes sous vide 22 avec la première ligne 28 isolée est encore dans un état de fonctionnement D défectueux avec une fuite d'air. Cela signifie que la fuite d'air n'affecte pas la première ligne 28 ou affecte la première ligne 28 et, simultanément, la deuxième ligne 30 et/ou le réservoir d'eaux usés 24.

Dans une deuxième étape de discrimination 104, le dispositif de commande 32 teste si la fuite d'air affecte la deuxième ligne 30. A cet effet, le dispositif de commande 32 isole la deuxième ligne 30 en fermant la deuxième vanne d'isolation 44 pour bloquer la deuxième conduite 42, la première vanne d'isolation 38 restant ouverte, puis active l'une des pompes de mise à vide 26 de sorte à générer une dépression dans le réservoir d'eaux usées 24 et le dispositif de commande 32 mesure de nouveau le niveau de dépression P dans le réservoir d'eaux usées 24.

Si le niveau de dépression P est supérieur au seuil prédéterminé δ, le dispositif de commande 32 identifie que le système de toilettes sous vide 22 avec la deuxième ligne 30 isolée est dans un état de fonctionnement N normal sans fuite d'air. Le dispositif de commande 32 identifie ainsi que la fuite d'air affecte seulement la deuxième ligne 30. Le procédé d'identification s'arrête ici. Le système de toilette sous vide 22 est par exemple maintenu en état de fonctionnement avec la deuxième ligne 30 mise hors service.

Si le niveau de dépression P est inférieur ou égal au seuil prédéterminé δ, le dispositif de commande 32 identifie que le système de toilettes sous vide 22 avec la deuxième ligne 30 isolée est encore dans un état de fonctionnement D défectueux avec une fuite d'air. Cela signifie que la fuite d'air n'affecte pas la deuxième ligne 30 ou affecte la deuxième ligne 30 et, simultanément, la première ligne 28 et/ou le réservoir d'eaux usés 24.

Dans une troisième étape de discrimination 106, le dispositif de commande 32 teste si la fuite d'air affecte le réservoir d'eaux usés 24. A cet effet, le dispositif de commande 32 isole la première ligne 28 et la deuxième ligne 30 du réservoir d'eaux usées 24, en fermant respectivement la première vanne d'isolation 38 et la deuxième vanne d'isolation 44, puis active l'une des pompes de mise à vide 26 de sorte à générer une dépression dans le réservoir d'eaux usées 24, et le dispositif de commande 32 mesure le niveau de dépression P dans le réservoir d'eaux usées 24.

Si le niveau de dépression P est supérieur au seuil prédéterminée δ, le dispositif de commande 32 identifie que le système de toilettes sous vide 22 avec la première ligne 28 et la deuxième ligne 30 isolées du réservoir d'eaux usées 24 est dans un état de fonctionnement N normal sans fuite d'air. Le dispositif de commande 32 identifie ainsi que la fuite d'air affecte la première ligne 28, la deuxième ligne 30 ou les deux simultanément.

Si le niveau de dépression P est inférieur ou égal au seuil prédéterminé δ, le dispositif de commande 32 identifie que le système de toilettes sous vide 22 avec la première ligne 28 et la deuxième ligne 30 du réservoir d'eaux usées 24 est encore dans un état de fonctionnement D défectueux avec une fuite d'air. Cela signifie que la fuite affecte le réservoir d'eaux usés 24. Le procédé d'identification s'arrête ici.

En option, le dispositif de commande 32 est configuré pour générer un rapport, indiquant par exemple si une fuite d'air a été détectée et/ou, le cas échéant, une localisation de la fuite d'air, et/ou pour transmettre le rapport, par exemple à un dispositif électronique d'un opérateur de maintenance tel qu'un ordiphone, une tablette numérique, un ordinateur personnel ou un ordinateur portable, et/ou pour afficher le rapport, par exemple sur un écran d'affichage d'une interface homme-machine du dispositif de commande 32.

Avantageusement, le procédé est mis en œuvre automatiquement à chaque démarrage du système de toilettes sous vide 22.

Un tel système de toilettes sous vide 22 présente l'avantage d'être adapté à un véhicule à deux étages tout en restant économe en place, par l'utilisation d'un seul réservoir d'eaux usées 24 pour la première ligne 28 et la deuxième ligne 30 comprenant respectivement la première cuvette de toilettes 34 et la deuxième cuvette de toilettes 40.

Grâce au dispositif de commande 32, il est possible d'identifier l'origine de la fuite d'air et d'isoler la ligne défectueuse du reste du système de toilettes sous vide 22, de sorte que la ligne fonctionnant correctement puisse rester en service. Cet avantage permet d'augmenter la fiabilité du système de toilettes sous vide 22.

Par ailleurs, l'utilisation de capteurs de pression 46 et/ou de pompes de mise à vide 26 redondants augmente également la fiabilité du système de toilettes sous vide 22.

En outre, la mise en œuvre automatique du procédé d'identification de fuite d'air à chaque démarrage du système de toilettes sous vide 22 permet une identification rapide des fuites d'air et de leur origine, et d'ainsi mettre en place les opérations de maintenance nécessaires le plus tôt possible.

## Revendications

1. Système de toilettes sous vide (22), configuré pour être installé dans un véhicule destiné au transport de passagers, comprenant :
- un réservoir d'eaux usées (24),
- une première ligne (28) comprenant une première cuvette de toilettes (34) connectée au réservoir d'eaux usées (24) par une première conduite (36) munie d'une première vanne d'isolation (38),
- une deuxième ligne (30) comprenant une deuxième cuvette de toilettes (40) connectée au réservoir d'eaux usées (24) par une deuxième conduite (42) munie d'une deuxième vanne d'isolation (44),
- au moins une pompe de mise à vide (26) raccordée au réservoir d'eaux usées (24) pour générer une dépression dans le réservoir d'eaux usées (24) pour l'aspiration des eaux usées de la première cuvette de toilettes (34) et de la deuxième cuvette de toilettes (40) vers le réservoir d'eaux usées (24),
- un dispositif de commande (32) configuré pour détecter une fuite d'air affectant la première ligne (28) et commander la fermeture de la première vanne d'isolation (38) en cas de détection d'une fuite d'air affectant la première ligne (28), et pour détecter une fuite d'air affectant la deuxième ligne (30) et commander la fermeture de la deuxième vanne d'isolation (44) en cas de détection d'une fuite d'air affectant la deuxième ligne (30) : le système de toilettes sous vide étant **caractérisé en ce qu'**il comprend également un capteur de pression (46) configuré pour mesurer le niveau de dépression (P) dans le réservoir d'eaux usées (24), le dispositif de commande (32) étant connecté à ce capteur de pression (46).

2. Système de toilettes sous vide (22) selon la revendication 1, dans lequel le dispositif de commande (32) est configuré pour, en cas de niveau de dépression (P) dans le réservoir d'eaux usées (24) inférieur à un seuil prédéterminé (P1) indicatif d'une fuite d'air, commander différentes configurations d'ouverture / fermeture de la première vanne d'isolation (38) et de la deuxième vanne d'isolation (44) en mesurant la dépression dans le réservoir d'eaux usées (24) pour chacune des configurations, pour déterminer si la fuite d'air affecte la première ligne (28), la deuxième ligne (30) et/ou le réservoir d'eaux usées (24).

3. Système de toilettes sous vide (22) selon la revendication 1 ou 2, dans lequel le dispositif de commande (32) est configuré pour, en cas de niveau de dépression (P) dans le réservoir d'eaux usées (24) inférieur à un seuil prédéterminé (P1) indicatif d'une fuite d'air, commander la fermeture de la première vanne d'isolation (38) et l'ouverture la deuxième vanne d'isolation (44) en mesurant la dépression dans le réservoir d'eaux usées (24) et/ou pour commander l'ouverture de la première vanne d'isolation (38) et la fermeture de la deuxième vanne d'isolation (44) en mesurant la dépression dans le réservoir d'eaux usées (24) et/ou pour commander la fermeture de la première vanne d'isolation (38) et la fermeture de la deuxième vanne d'isolation (44), de manière à déterminer si la fuite affecte la première ligne (28), la deuxième ligne (30) et/ou le réservoir d'eaux usées (24).

4. Système de toilettes sous vide (22) selon la revendication 2 ou 3, dans lequel le dispositif de commande (32) est configuré pour commander la fermeture de la première vanne d'isolation (38) et l'ouverture de la deuxième vanne d'isolation (44) si la fuite d'air affecte seulement la première ligne (28), pour commander l'ouverture de la première vanne d'isolation (38) et la fermeture de la deuxième vanne d'isolation (44) si la fuite d'air affecte seulement la deuxième ligne (30), et/ou pour commander la fermeture de la première vanne d'isolation (38) et la fermeture de la deuxième vanne d'isolation (44) si la fuite d'air affecte simultanément la première ligne (28) et la deuxième ligne (30) ou si la fuite d'air affecte le réservoir d'eaux usées (24).

5. Système de toilettes sous vide (22) selon l'une des revendication 1 à 4, dans lequel le dispositif de commande (32) est connecté à deux capteurs de pression (46), chacun configuré pour mesurer le niveau de dépression (P) dans le réservoir d'eaux usées (24).

6. Système de toilettes sous vide (22) selon la revendication 5, dans lequel le dispositif de commande (32) est configuré pour comparer le niveau de dépression (P) mesuré par chacun des deux capteurs de pression (46) pour identifier une défaillance éventuelle de l'un des deux capteurs de pression (46).

7. Système de toilettes sous vide (22) selon l'une des revendications précédentes, comprenant deux pompes de mise à vide (26) raccordées au réservoir d'eaux usées (24).

8. Voiture (10) d'un véhicule destiné au transport de passagers, notamment un véhicule ferroviaire, comprenant au moins un système de toilettes sous vide (22) selon l'une des revendications précédentes, la voiture (10) comprenant un premier étage (12) et un deuxième étage (14), la première cuvette de toilettes (34) étant agencée au premier étage (12) et la deuxième cuvette de toilettes (40) étant agencée au deuxième étage (14).

9. Procédé d'identification de la source d'une fuite d'air dans un système de toilettes sous vide (22) selon l'une des revendications 1 à 7, le procédé étant mis en œuvre par le dispositif de commande (32), le procédé comprenant les étapes suivantes :
- une étape de détection (100) dans laquelle le dispositif de commande (32) identifie si le système de toilettes sous vide (22) est dans un état de fonctionnement (N) normal sans fuite d'air ou dans un état de fonctionnement (D) défectueux avec une fuite d'air ; et
- au moins une étape de discrimination (102, 104, 106) dans laquelle le dispositif de commande (32) teste si la fuite d'air affecte la première ligne (28), la deuxième ligne (30) et/ou le réservoir d'eaux usés (24).

## Patentansprüche

1. Vakuum-Toilettensystem (22), welches dazu eingerichtet ist, in einem Fahrzeug installiert zu sein, welches für den Transport von Passagieren vorgesehen ist, umfassend:
- einen Abwassertank (24),
- eine erste Leitung (28), welche eine erste Toilettenschüssel (34) umfasst, welche mit dem Abwassertank (24) durch ein erstes Rohr (36) verbunden ist, welches mit einem ersten Absperrventil (38) bereitgestellt ist,
- eine zweite Leitung (30), welche eine zweite Toilettenschüssel (40) umfasst, welche mit dem Abwassertank (24) durch ein zweites Rohr (42) verbunden ist, welches mit einem zweiten Absperrventil (44) bereitgestellt ist,
- wenigstens eine Vakuumpumpe (26), welche mit dem Abwassertank (24) gekoppelt ist, um einen Unterdruck in dem Abwassertank (24) zu erzeugen, um Abwasser aus der ersten Toilettenschüssel (34) und der zweiten Toilettenschüssel (40) in Richtung des Abwassertanks (24) anzusaugen,
- eine Steuervorrichtung (32), welche dazu eingerichtet ist, ein Luftleck zu detektieren, welches die erste Leitung (28) betrifft, und das Schließen des ersten Absperrventils (38) in dem Fall einer Detektion eines Luftlecks anzuweisen, welches die erste Leitung (28) betrifft, und ein Luftleck zu detektieren, welches die zweite Leitung (30) betrifft, und das Schließen des zweiten Absperrventils (44) in dem Fall einer Detektion eines Luftlecks anzuweisen, welches die zweite Leitung (30) betrifft,
wobei das Vakuum-Toilettensystem **dadurch gekennzeichnet ist, dass** es ferner einen Drucksensor (46) umfasst, welcher dazu eingerichtet ist, den Pegel des Unterdrucks (P) in dem Abwassertank (24) zu messen, wobei die Steuervorrichtung (32) mit dem Drucksensor (46) verbunden ist.

2. Vakuum-Toilettensystem (22) nach Anspruch 1, wobei die Steuervorrichtung (32) dazu eingerichtet ist, in dem Fall, dass der Pegel des Unterdrucks (P) in dem Abwassertank (24) kleiner als ein vorbestimmter Schwellenwert (P1) ist, welcher ein Luftleck anzeigt, unterschiedliche Öffnungs-/Schließkonfigurationen des ersten Absperrventils (38) und des zweiten Absperrventils (44) anzuweisen, wobei der Unterdruck in dem Abwassertank (24) für jede der Konfigurationen gemessen wird, um zu bestimmen, ob das Luftleck die erste Leitung (28), die zweite Leitung (30) und/oder den Abwassertank (24) betrifft.

3. Vakuum-Toilettensystem (22) nach Anspruch 1 oder 2, wobei die Steuervorrichtung (32) dazu eingerichtet ist, in dem Fall, dass der Pegel des Unterdrucks (P) in dem Abwassertank (24) kleiner als ein vorbestimmter Schwellenwert (P1) ist, welcher ein Luftleck anzeigt, das Schließen des ersten Absperrventils und das Öffnen des zweiten Absperrventils (44) anzuweisen, wobei der Unterdruck in dem Abwassertank (24) gemessen wird, und/oder das Öffnen des ersten Absperrventils (38) und das Schließen des zweiten Absperrventils (44) anzuweisen, wobei der Unterdruck in dem Abwassertank (24) gemessen wird, und/oder das Schließen des ersten Absperrventils (38) und das Schließen des zweiten Absperrventils (44) anzuweisen, um zu bestimmen, ob das Leck die erste Leitung (28), die zweite Leitung (30) und/oder den Abwassertank (24) betrifft.

4. Vakuum-Toilettensystem (22) nach Anspruch 2 oder 3, wobei die Steuervorrichtung (32) dazu eingerichtet ist, das Schließen des ersten Absperrventils (38) und das Öffnen des zweiten Absperrventils (44) anzuweisen, wenn das Luftleck lediglich die erste Leitung (28) betrifft, das Öffnen des ersten Absperrventils (38) und das Schließen des zweiten Absperrventils (44) anzuweisen, wenn das Luftleck lediglich die zweite Leitung (30) betrifft, und/oder das Schließen des ersten Absperrventils (38) und das Schließen des zweiten Absperrventils (44) anzuweisen, wenn das Luftleck gleichzeitig die erste Leitung (28) und die zweite Leitung (30) betrifft, oder wenn das Luftleck den Abwassertank (24) betrifft.

5. Vakuum-Toilettensystem (22) nach einem der Ansprüche 1 bis 4, wobei die Steuervorrichtung (32) mit zwei Drucksensoren (46) verbunden ist, welche jeweils dazu eingerichtet sind, den Pegel des Unterdrucks (P) in dem Abwassertank (24) zu messen.

6. Vakuum-Toilettensystem (22) nach Anspruch 5, wobei die Steuervorrichtung (32) dazu eingerichtet ist, den Pegel des Unterdrucks (P), welcher durch jeden der beiden Drucksensoren (46) gemessen wird, zu vergleichen, um eine mögliche Störung von einem der beiden Drucksensoren (46) zu identifizieren.

7. Vakuum-Toilettensystem (22) nach einem der vorhergehenden Ansprüche, umfassend zwei Vakuumpumpen (26), welche mit dem Abwassertank (24) gekoppelt sind.

8. Wagen (10) eines Fahrzeugs, welches für den Transport von Passagieren vorgesehen ist, insbesondere ein Schienenfahrzeug, umfassend wenigstens ein Vakuum-Toilettensystem (22) nach einem der vorhergehenden Ansprüche, wobei das Fahrzeug (10) eine erste Etage (12) und eine zweite Etage (14) umfasst, wobei die erste Toilettenschüssel (34) in der ersten Etage (12) angeordnet ist und die zweite Toilettenschüssel (40) in der zweiten Etage (14) angeordnet ist.

9. Verfahren zum Identifizieren der Quelle eines Luftlecks in einem Vakuum-Toilettensystem (22) nach einem der Ansprüche 1 bis 7, wobei das Verfahren durch die Steuervorrichtung (32) durchgeführt wird, wobei das Verfahren die folgenden Schritte umfasst:
- einen Schritt eines Detektierens (100), in welchem die Steuervorrichtung (32) identifiziert, ob das Vakuum-Toilettensystem (22) in einem normalen Betriebszustand (N) ohne Luftleck oder in einem fehlerhaften Betriebszustand (D) mit einem Luftleck ist; und
- wenigstens einen Schritt eines Unterscheidens (102, 104, 106), in welchem die Steuervorrichtung (32) testet, ob das Luftleck die erste Leitung (28), die zweite Leitung (30) und/oder den Abwassertank (24) betrifft.

## Claims

1. Vacuum toilet system (22), configured to be installed in a vehicle intended to transport passengers, comprising:
- a wastewater tank (24),
- a first line (28) comprising a first toilet bowl (34) connected to the wastewater tank (24) by a first pipe (36) provided with a first shut-off valve (38),
- a second line (30) comprising a second toilet bowl (40) connected to the wastewater tank (24) by a second pipe (42) provided with a second shut-off valve (44),
- at least one vacuum pump (26) connected to the wastewater tank (24) for generating a vacuum in the wastewater tank (24) for the suction of the wastewater from the first toilet bowl (34) and the second toilet bowl (40) towards the wastewater tank (24),
- a control device (32) configured to detect an air leak affecting the first line (28) and control closure of the first shut-off valve (38) in the event of detection of an air leak affecting the first line (28), and to detect an air leak affecting the second line (30) and control closure of the second shut-off valve (44) in the event of detection of an air leak affecting the second line (30):
the vacuum toilet system being **characterised in that** it also comprises a pressure sensor (46) configured to measure the vacuum level (P) in the wastewater tank (24), the control device (32) being connected to this pressure sensor (46).

2. Vacuum toilet system (22) according to claim 1, wherein the control device (32) is configured, in case of a vacuum level (P) in the wastewater tank (24) lower than a predetermined threshold (P1) indicative of an air leak, to command different opening / closure configurations of the first shut-off valve (38) and of the second shut-off valve (44) by measuring the vacuum in the wastewater tank (24) for each of the configurations, to determine whether the air leak is affecting the first line (28), the second line (30), and/or the wastewater tank (24).

3. Vacuum toilet system (22) according to claim 1 or 2, wherein the control device (32) is configured, in case of a vacuum level (P) in the wastewater tank (24) lower than a predetermined threshold (P1) indicative of an air leak, to command closure of the first shut-off valve (38) and opening of the second shut-off valve (44) by measuring the vacuum in the wastewater tank (24) and/or to command opening of the first shut-off valve (38) and closure of the second shut-off valve (44) by measuring the vacuum in the wastewater tank (24) and/or to command closure of the first shut-off valve (38) and closure of the second shut-off valve (44), so as to determine whether the leak is affecting the first line (28), the second line (30) and/or the wastewater tank (24).

4. Vacuum toilet system (22) according to claim 2 or 3, wherein the controller (32) is configured to command closure of the first shut-off valve (38) and opening of the second shut-off valve (44) if the air leak is affecting only the first line (28), to command opening of the first shut-off valve (38) and closure of the second shut-off valve (44) if the air leak is affecting only the second line (30), and/or to command closure of the first shut-off valve (38) and closure of the second shut-off valve (44) if the air leak is simultaneously affecting the first line (28) and the second line (30) or if the air leak is affecting the wastewater tank (24).

5. Vacuum toilet system (22) according to one of claims 1 to 4, wherein the control device (32) is connected to two pressure sensors (46), each configured to measure the vacuum level (P) in the wastewater tank (24).

6. Vacuum toilet system (22) according to claim 5, wherein the control device (32) is configured to compare the vacuum level (P) measured by each of the two pressure sensors (46) to identify a possible failure of one of the two pressure sensors (46).

7. Vacuum toilet system (22) according to one of the preceding claims, comprising two vacuum pumps (26) connected to the wastewater tank (24).

8. Car (10) of a vehicle intended to transport passengers, particularly a railway vehicle, comprising at least one vacuum toilet system (22) according to one of the preceding claims, the car (10) comprising a first deck (12) and a second deck (14), the first toilet bowl (34) being arranged on the first deck (12) and the second toilet bowl (40) being arranged on the second deck (14).

9. Method for identifying the source of an air leak in a vacuum toilet system (22) according to any of claims 1 to 7, the method being implemented by the control device (32), the method comprising the following steps:
- a detection step (100) wherein the control device (32) identifies whether the vacuum toilet system (22) is in a normal operating state (N) with no air leak or in a faulty operating state (D) with an air leak; and
- at least one discrimination step (102, 104, 106) wherein the control device (32) tests whether the air leak is affecting the first line (28), the second line (30) and/or the wastewater tank (24).
